# FASCICULE DE BREVET EUROPEEN

(11) **EP 2 681 176 B1**
(45) Date de publication et mention de la délivrance du brevet: **28.12.2016**
(21) Numéro de dépôt: 12712317.2
(22) Date de dépôt: 02.03.2012
(51) Int. Cl.: C05D 7/00, C05G 3/00

(54) **PRODUIT DESTINE A ETRE ADDITIONNE A L'EAU D'IRRIGATION DE CULTURES**
PRODUKT ALS ZUSATZ FÜR BEWÄSSERUNGSWASSER FÜR ERNTEPFLANZEN
PRODUCT INTENDED TO BE ADDED TO CROP IRRIGATION WATER

(30) Priorité: 03.03.2011 FR 1151743
(43) Date de publication de la demande: 08.01.2014
(73) Titulaire: S.P.C.M. SA, 42160 Andrézieux Bouthéon (FR)
(72) Inventeur: VIALATTE, Loic, F-69007 Lyon (FR); SABATIER, Bernard, F-42380 Perigneux (FR)
(74) Mandataire: Sarlin, Laure V.
(86) Numéro de dépôt international: PCT/FR2012/050443
(87) Numéro de publication internationale: WO 2012/117211

(56) Documents cités:
- EP-A2- 0 415 141
- WO-A1-92/19102
- WO-A2-01/82869
- WO-A2-97/03111
- DE-U1-202008 005 385
- US-A- 5 405 425
- US-A1- 2006 272 205

## Description

La présente invention concerne le domaine technique de l'irrigation en agriculture. Plus précisément, la présente invention a pour objet une composition sous la forme d'une poudre comprenant au moins un polymère hydrosoluble et un système effervescent conditionnée dans un film hydrosoluble formant un sachet. Ce conditionnement associé à la dite composition permet d'obtenir la dissolution rapide et complète du polymère tout en s'affranchissant d'une étape d'agitation.

L'irrigation est une technique bien connue de l'homme du métier. Elle consiste à apporter artificiellement de l'eau aux cultures. Elle est utilisée entre autres pour des cultures gourmandes en eau (ex : maïs, coton, etc) ou encore en zone présentant une faible pluviométrie, afin de satisfaire les besoins de la plante.

Il existe différents types de système d'irrigation qui peuvent être classés en deux catégories :
- Les systèmes gravitaires : le plus connu est l'irrigation en bassin où l'eau est apportée sous forme d'une nappe dans un bassin aménagé sur un sol nivelé (pente 0,1 - 1%). On peut aussi citer l'irrigation à la raie ou l'eau est amenée par ruissellement dans des sillons séparés.
- Les systèmes sous pression : sans l'irrigation par aspersion, l'eau est diffusée sous forme de pluie avec régulation et uniformité. Ces systèmes peuvent être fixes ou mobiles. On peut aussi citer l'irrigation localisée dite goutte à goutte, où l'eau circule dans des tuyaux souples de petit diamètre disposés à la surface du sol, en sous-sol ou enterrés. Ces tuyaux sont munis de dispositif « goutteurs » qui apportent l'eau à proximité des racines.

Depuis ces 50 dernières années, des polymères organiques tels que les polyacrylamides sont fortement utilisés pour stabiliser les sols, contrôler l'érosion et/ou améliorer la rétention d'eau et de nutriments.

En effet, en 1986, Wallace a découvert que l'utilisation de polymères sur champs permettait une stabilisation du sol (Effects of excess levels of a polymer as a soil conditioner on yields and mineral nutrition plants - Soil Science 141, 377-380). Aase, quant à lui, a démontré en 1998 que le polyacrylamide réduisait la perte d'eau et l'érosion qui sont dues au système d'irrigation (Sprinkler irrigation runoff and erosion control with polyacrylamide - laboratory tests - Soil Scence Society of America journal 62, 1681-1686). Enfin, plus récemment, Phillips en 2007 a noté que l'application de polymère en faible concentration avait un effet significatif sur la réduction des infiltrations de l'eau pour les sols peu structurés (Impact of PAM on the hydrological properties of some light textured soils. Thesis for Masters of Applied Science, Adelaide University 2007). Les documents EP 0 415 141, US 5,405,425 et WO 01/82 869 décrivent des formulations de polymère hydrosolubles particulièrement adaptées au traitement des sols en agriculture.

Pour leurs applications en agriculture, en vue de stabiliser les sols et limiter l'érosion, les polymères hydrosolubles sont commercialisés sous différentes formes :
- la forme poudre qui est peu pratique à manipuler car elle engendre la formation de poussières qui sont dangereuses pour l'utilisateur. De plus, cette forme nécessite un appareil de mélange et un temps de dissolution important. Quand la dissolution est mal effectuée, elle génère des grumeaux qui peuvent ensuite boucher les canalisations lors de l'irrigation,
- l'émulsion inverse qui palie quelques uns des problèmes cités ci-dessus. Toutefois, elle nécessite une phase de dissolution afin d'inverser l'émulsion. Aussi, cette forme nécessite l'utilisation d'une pompe doseuse, afin d'avoir un dosage précis, qui est peu commode. De plus, la présence d'huile peut poser un problème car elle est parfois interdite pour des raisons environnementales,
- la forme tablette ou pastille qui facilite le dosage, mais dont la dissolution est très lente (souvent plus d'une heure) et incomplète. En outre, à cause du vieillissement, les tablettes ont tendance à durcir et engendrent des insolubles lors de l'utilisation.

La demande WO 97/03 111 décrit une composition sous la forme de granules qui présente les mêmes inconvénients que les compositions sous forme de tablettes ou pastilles.

US 2006/272205 décrit une composition comprenant un agent effervescent enfermé dans une capsule composée de polysaccharide végétal.

Dans ce contexte, la présente invention se propose de fournir une nouvelle formulation de polymères hydrosolubles qui permette de pallier les problèmes cités ci-dessus.

L'invention consiste en un produit destiné à être additionnée à l'eau d'irrigation de cultures ou plantations comprenant une composition contenant un ou plusieurs polymères hydrosolubles et un système effervescent, caractérisé en ce que la composition se présente sous la forme d'une poudre, et en particulier d'une poudre de particules individualisées, ladite composition étant emprisonnée dans un film hydrosoluble. Ce film hydrosoluble, une fois immergé dans l'eau, se dissout et permet ainsi de mettre en contact avec l'eau de manière graduelle la composition polymérique qui va faciliter la diffusion et la dissolution du ou des polymère(s) dans l'eau.

La présentation de la composition conforme à l'invention est adaptée aux utilisations dans le domaine de l'agriculture et permet de s'affranchir d'une étape d'agitation, de faciliter le dosage, et d'améliorer le temps de dissolution, tout en évitant le contact direct avec la poudre pour l'utilisateur.

La présente invention a également pour objet un procédé d'irrigation de culture dans lequel les cultures sont irriguées avec de l'eau dans laquelle un produit selon l'invention a été dissous. Selon un mode de réalisation avantageux, le produit est dissous dans l'eau d'irrigation, en l'absence d'agitation. Dans le cadre de l'invention, l'irrigation peut être réalisée grâce à un dispositif d'irrigation gravitaire ou à un dispositif d'irrigation sous pression.

Selon un mode de réalisation particulier, la composition présente dans le produit selon l'invention contient, en outre, un agent anti-tassement et/ou des charges minérales.

Par composé (polymère ou film) « hydrosoluble », on entend généralement un composé pouvant se dissoudre ou se disperser dans l'eau sous la forme d'une solution moléculaire à température ambiante (25°C), notamment lorsqu'il est introduit à raison de 0,1% en masse dans l'eau.

Le ou les polymères hydrosolubles de l'invention sont, de préférence, des copolymères composés de différents monomères, et en particulier :
- de 1 à 99 mol % d'au moins un monomère anionique. Les monomères anioniques pouvant être utilisés dans la présente invention peuvent être choisis dans un large groupe. Ces monomères peuvent présenter des fonctionnalités acryliques, vinyliques, maléiques, fumariques, allyliques et contenir un groupe carboxy, phosphonate, sulfonate, ou un autre groupe à charge anionique, ou bien le sel d'ammonium ou de métal alcalino terreux ou de métal alcalin correspondant. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido2-méthylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, ou d'ammonium, et,
- de 1 à 99 mol % d'au moins un monomère non ionique. Les monomères non ioniques pouvant être utilisés dans le cadre de l'invention peuvent être choisis, notamment, dans le groupe comprenant les monomères vinyliques solubles dans l'eau. Des monomères préférés appartenant à cette classe sont, par exemple, l'acrylamide et le méthacrylamide, le N-isopropylacrylamide, le N,N-diméthylacrylamide et le N-méthylolacrylamide. Egalement, peuvent être utilisés la N-vinylformamide, le N-vinyl acétamide, la N-vinylpyridine et la N-vinylpyrrolidone. Un monomère non ionique préféré est l'acrylamide.

Selon certains modes de réalisation, en plus des monomères ci-dessus, le(s) polymères hydrosolubles peuvent également comprendre :
- un ou plusieurs monomères cationiques de type acrylamide, acrylique, vinylique, allylique ou maléique possédant une fonction amine ou ammonium quaternaire. On peut citer, en particulier et de façon non limitative, l'acrylate de diméthylaminoéthyl (ADAME), et le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et le chlorure de méthacrylamido propyltriméthyl ammonium (MAPTAC). Les monomères zwittérioniques réalisés à partir des groupes cationiques et anioniques ci-dessous peuvent aussi être utilisés dans le cadre de l'invention, et/ou,
- un ou plusieurs monomères hydrophobes de type acrylamide, acrylique, vinylique, allylique ou maléique possédant une fonction hydrophobe latérale choisis préférentiellement parmi les dérivés de l'acrylamide comme les N-alkylacrylamides, par exemple, le diacétone acrylamide, l'isopropyl acrylamide, le N-tert-butylacrylamide, l'octylacrylamide, et les N,N-dialkylacrylamides comme le N,N-dihexylacrylamide et le N,N diméthylacrylamide et les dérivés d'acide acrylique comme les alkyl acrylates et méthacrylates. Egalement peuvent être utilisés les monomères vinyliques comme la N-vinylformamide, le N-vinyl acétamide, la N-vinylpyridine et le N-vinylimidazole.

Les polymères utilisés dans le cadre de l'invention ne nécessitent pas de développement de procédé de polymérisation particulier. Ils peuvent être obtenus par toutes les techniques de polymérisation bien connues par l'homme du métier (polymérisation en solution, polymérisation en gel, polymérisation par précipitation, polymérisation en émulsion (aqueuse ou inverse) suivie d'une étape de spray drying, polymérisation en suspension, polymérisation micellaire suivie d'une étape de précipitation), comme décrit dans Synthetic polyelectrolytes - a review - David A Mortimer - Polymer international 25 (1991) 29-41.

L'ionicité du ou des polymères hydrosolubles présents dans la composition est, de préférence, de 1 à 50%mol anionique, et préférentiellement de 10 à 30%mol anionique. Le poids moléculaire du ou des polymères hydrosolubles présents dans la composition est, en général, supérieur à 1 million g/mol.

Le polymère ou les polymères hydrosolubles représente(nt), de préférence, de 1 à 50%, préférentiellement de 4,5 à 40%, et plus préférentiellement de 9 à 20% en masse de la masse totale de la composition.

Le système effervescent peut se présenter sous la forme d'un composé unique, mais le plus souvent, il sera constitué d'un couple de composés. Un tel couple effervescent comprend typiquement un ou plusieurs composés acides et un composé alcalin. Le ou les composés acides peuvent être, de manière non limitative, choisi(s) parmi l'acide citrique, l'acide tartrique, l'acide adipique, l'acide fumarique, l'acide maléique et leurs sels. Le composé alcalin peut être choisi, de manière non limitative, parmi les carbonates et les bicarbonates de sodium, de calcium et de potassium. De préférence, le système effervescent sera constitué d'acide citrique, d'acide adipique et de bicarbonate de sodium.

Le ratio en masse du ou des composé(s) acide(s) et du composé alcalin appartient, par exemple, à la gamme allant de 1:99 à 99:1, de préférence, à la gamme allant de 1:10 à 10:1, et, est notamment égal à 1:1.

Le système effervescent, et en particulier le couple effervescent acide(s)/composé alcalin précédemment décrit, représente, de préférence, de 1 à 50%, préférentiellement de 5 à 30%, et plus préférentiellement de 20 à 25% en masse de la masse totale de la composition.

L'agent anti-tassement, lorsqu'il est présent, peut, par exemple, être choisi parmi la liste suivante non exhaustive : carboxyméthyl cellulose (CMC), carbonate de sodium, carbonate de potassium, carbonate d'ammonium, bicarbonate d'ammonium, ferrocyanure de sodium, ferrocyanure de potassium, ferrocyanure de calcium, silicate de zinc. De préférence, on utilisera la carboxyméthylcellulose. La présence d'un tel agent anti-tassement va notamment favoriser la non agglomération de la poudre à l'intérieur de l'emballage formé par le film, qui se présente le plus souvent sous la forme d'un sachet.

L'agent anti-tassement représente, de préférence de 0 à 10%, préférentiellement de 0,5 à 5%, et plus préférentiellement de 1 à 2% en masse de la masse totale de la composition.

La ou les charges minérales, lorsqu'elles sont présentes, sont sélectionnées de manière non limitative parmi les sels de sulfate ou de chlorure de métaux alcalin. De préférence, on choisira le sulfate de sodium.

Les charges minérales représentent, de préférence, de 0 à 98%, de préférence de 10 à 90%, et plus préférentiellement de 20 à 70% en masse de la masse totale de la composition.

La composition peut éventuellement contenir d'autres composés couramment utilisés dans l'agriculture comme, par exemple, des oligoéléments tels que le bore, le cuivre, le fer, le manganèse, le molybdène, et/ou le zinc ; des engrais comme les ammonitrates, l'urée, le sulfate d'ammonium, le nitrate de potassium, l'ammoniac, le sulfate de potassium et/ou des phosphates passé à l'acide sulfurique, des phosphates calciques, des phosphates bicalciques, des phosphates d'ammonium ou des phosphates alumino calciques.

La composition peut aussi, de manière optionnelle, contenir un ou plusieurs colorants.

Bien entendu, les quantités des différents constituants présents dans la composition sont choisies, de manière à ce que la somme des proportions de tous les constituants présents soit égale à 100%. Selon un mode de réalisation particulier pouvant être combiné aux précédents, la masse totale du ou des polymères hydrosolubles présents, du système effervescent, de l'agent anti-tassement et des charges minérales représente de 90% à 100% de la masse totale de la composition, et de préférence de 95 à 99% de la masse totale de la composition.

Selon un mode de réalisation particulier, la composition comprend donc :
- de 1 à 50% en masse de polymère(s) hydrosoluble(s),
- de 1 à 50% en masse d'un système effervescent,
- de 0 à 10% en masse d'agent anti-tassement, et
- de 0 à 98% de charges minérales.

Selon un mode de réalisation préféré, la composition comprend :
- de 4,5 à 40% en masse de polymère(s) hydrosoluble(s),
- de 5 à 30% en masse d'un système effervescent,
- de 0,5 à 5% en masse d'agent anti-tassement, et
- de 10 à 90% de charges minérales.

Selon un mode de réalisation encore plus préféré, la composition comprend :
- de 9 à 20% en masse de polymère(s) hydrosoluble(s),
- de 20 à 25% en masse d'un système effervescent,
- de 1 à 2% en masse d'agent anti-tassement, et
- de 20 à 70% de charges minérales.

En particulier, les compositions présentes dans le produit selon l'invention comportent, en plus du ou des polymères hydrosolubles, de préférence à base d'acrylamide, un mélange acide citrique, acide adipique et bicarbonate de sodium, en tant que système effervescent, du carboxyméthylcellulose en tant qu'agent anti-tassement et du sulfate de sodium en tant que charge minérale.

La composition se présente sous la forme d'une poudre, ou plus précisément d'un mélange de poudres, chacun des constituants se trouvant sous la forme d'une poudre. Les particules présentes au sein de la poudre sont dites individualisées, car elles ne sont pas agrégées les unes aux autres pour former une forme solide unique. Ceci permet de favoriser, en combinaison avec la présence du système effervescent, leur dissolution dans l'eau, une fois que la barrière du film hydrosoluble a disparue. La poudre peut également être qualifiée de non-agglomérée, c'est-à-dire que les particules ne sont pas agrégées les unes aux autres pour former un ensemble unique du type tablette ou pastille. Néanmoins, il n'est pas exclu que localement, la poudre comporte des agrégations de particules. La taille des particules de la composition est, de préférence, inférieure à 1 millimètre, de préférence inférieure 500 micromètres. Préférentiellement, la taille des particules du ou des polymères est inférieure à 300 micromètres. Dans le cadre de l'invention, la taille des particules peut être définie par la taille moyenne en volume, qui peut, par exemple, être déterminée à l'aide de l'appareil Mastersizer 2000 de la société MALVERN avec un modèle mathématique basé sur la théorie de la diffusion de Mie.

Les différentes poudres constitutives de la composition pourront être mélangées selon toutes techniques connues de manière à obtenir un mélange homogène.

Cette poudre est emprisonnée dans un film hydrosoluble formant un sachet. Le film hydrosoluble, quant à lui, peut être composé d'une ou de plusieurs couches. La couche ou les couches peuvent, par exemple, être composées d'alcool polyvinylique, de polyoxyéthylène, de dérivés de la cellulose comme la méthylcellulose, la méthylhydroxyéthylcellulose, la méthylhydroxypropylcellulose, l'hydroxypropylcellulose, l'acétate de cellulose et les dérivés de cellulose modifés pour être hydrophobes, ou d'un composé choisi parmi le polyacrylate de sodium, l'acide polylactique, les éthers de l'acide lactique, les esters de l'alcool polyvinylique, les éthers de l'acide lactique, les esters de dérivés de cellulose, l'acide lactique greffé sur l'alcool polyvinylique, la carraghénane, la pectine, ou d'une combinaison de plusieurs des composés ci-dessus cités ou d'un mélange de un ou plusieurs de ces composés avec de l'amidon modifié ou non (amidon de maïs, de pomme de terre de riz et de blé). De préférence, le film hydrosoluble sera monocouche et composé d'alcool polyvinylique. Pour la fabrication de tels films, on pourra notamment se référer à Kirk-Othmer - Encyclopedia of chemical technology 5th edition - Vinyl alcohol polymer - F.L.Martens p591-p627.

Le film hydrosoluble peut être fabriqué selon la méthode de coulée ou d'extrusion. Un sachet peut être obtenu par soudure sur 2 côtés, « soudures 3 côtés » ou soudures 4 côtés pour former un « coussin », notamment. Le sachet est, de préférence, de forme générale rectangulaire avec des dimensions Lxlxh, avec L qui, par exemple, appartient à la gamme allant de 4,5 à 7 cm, l à la gamme allant de 2,5 à 4 cm, et h à la gamme allant de 1,5 à 0,8 cm.

L'épaisseur du film appartient, par exemple, à la gamme allant de 10 à 500 micromètres ou plus, de préférence à la gamme allant de 20 à 75 micromètres.

Le film constitue une enveloppe autour de la composition sous forme de poudre et forme un emballage dégradable dans l'eau, du type sachet. Chaque emballage unitaire du type sachet peut, par exemple, contenir de 5 à 100g de composition, de préférence de 10 à 50g.

Lorsque le produit selon l'invention, du type sachet, contenant la composition est placé dans de l'eau, le film hydrosoluble se dissout et se disperse dans l'eau pour libérer la composition à base de polymère. Le temps de dissolution de la composition est dépendant notamment de la taille des particules, de la proportion des différents composants et de l'épaisseur du film. De manière avantageuse, le temps de dissolution de la composition, une fois le produit placé dans 1m³ d'eau à 20°C, est de 2 minutes pour un sachet de 50 g comportant 20% de polymère.

Les exemples ci-dessous permettent d'illustrer l'invention mais n'ont nullement un caractère limitatif.

### EXEMPLES :

### Exemple 1 - Irrigation avec un système sous pression

Dans le but d'améliorer la pulvérisation d'engrais liquide sur de la vigne, l'utilisation d'un polymère hydrosoluble a été mise en oeuvre.

Un copolymère acrylamide/acrylate de sodium (70/30) de 10 millions g/mol en poids moléculaire a été préparé sous la forme d'une poudre dans un sachet hydrosoluble de 50g conformément à l'invention. La poudre est composée de 10% de polymère, 25% d'un système effervescent, 2% en carboxyméthyl cellulose, et complétée avec du sulfate de sodium. Le système effervescent est composé de 25% d'acide citrique, de 25% d'acide adipique et de 50% de bicarbonate de sodium. Cette composition conditionnée dans un film hydrosoluble, qui est composé d'alcool polyvinylique, est introduite dans la cuve d'un pulvérisateur contenant de la bouillie (mélange d'eau et d'engrais liquide). Sans agitation, la composition met moins de deux minutes pour se dissoudre.

A titre de comparaison, une tablette effervescente de 50g contenant 10% du même copolymère, est également introduite dans la cuve d'un pulvérisateur contenant de la bouillie (mélange d'eau et d'engrais liquide). Dans ce système, l'agitation est effectuée avec une recirculation en cuve d'eau. Malgré cette agitation la tablette demande 45 minutes pour se dissoudre.

Lors de la pulvérisation de la solution utilisant la tablette certaines buses se retrouvent bouchées. Après examen des buses, on retrouve de petits blocs provenant de la tablette. Leur origine peut être due à une mauvaise dissolution de la tablette malgré le temps et l'agitation consacrés.

Ce problème ne se retrouve pas dans la solution utilisant le sachet hydrosoluble. La pulvérisation utilisant cette forme fonctionne parfaitement.

### Exemple 2 - Irrigation avec un système sous pression

Dans cet exemple, un copolymère acrylamide/acrylate de sodium (80/20) de 10 millions g/mol en poids moléculaire a été testé sous la forme d'une poudre dans un sachet hydrosoluble de 50g conformément à l'invention. La composition de la poudre et le film sont identiques à ceux de l'exemple 1. L'utilisation de ce sachet a été comparée à un produit commercial (SoilPAM 135 de CIBA) comportant un polymère équivalent et étant sous une forme d'émulsion inverse.

Ces deux formes sont évaluées avec une cuve de fertigation lors de l'arrosage et la fertilisation d'oignons.

Pour la forme en émulsion inverse, l'émulsion oblige la présence d'une agitation, assurée par un malaxeur, durant 10 minutes à 500tr/min. Cet appareil implique donc la nécessité d'électricité. Après l'inversion de l'émulsion et la dissolution du polymère dans 200 litres d'eau, une quantité de micro éléments est ajoutée et la cuve (de 1m³) est remplie avec de l'eau.

Pour la forme selon l'invention, une quantité de polymère équivalente à la forme en émulsion inverse est introduite en sachet hydrosoluble. Aucune agitation n'est alors nécessaire pendant la dissolution du polymère.

Tout comme précédemment, la même quantité de micro éléments est introduite et la cuve est complétée avec de l'eau.

Sur trois champs à caractéristiques identiques, l'irrigation est déclenchée avec chacune des deux formes et un témoin qui ne contient pas de polymère, afin d'obtenir un sol superficiel constamment humide. L'évaporation importante nécessite une grande quantité de mélange, 6 heures d'irrigation sont nécessaires pour les deux formes et 9 heures pour le témoin.

A la fin de la saison, les oignons sont récoltés et il est observé que les récoltes des champs irrigués avec un polymère sont comparables et bien meilleurs que le témoin.

Le test montre bien que les performances du polymère ne sont pas affectées par la forme en sachet hydrosoluble et cela sans agitation.

### Exemple 3 - Irrigation avec un système gravitaire :

Une parcelle récemment plantée en jeunes plants d'eucalyptus, nécessite une irrigation bimensuelle pendant la saison sèche. La parcelle étant éloignée d'une source d'eau, des barils pouvant être remplis d'eau sont disposés devant chaque rang de plants pour les irriguer. Le remplissage des barils est assuré par un camion-citerne. Du fait des conditions difficiles, la forme émulsion ne peut être utilisée.

Une moitié des barils (témoin) est remplie uniquement avec de l'eau. L'autre moitié est remplie avec de l'eau à laquelle des sachets hydrosolubles sont additionnés, de manière à obtenir une concentration en polymère de 5 ppm par barils.

Pour les rangs témoin, une quantité équivalente à 5 litres d'eau par plant est nécessaire, tandis que 2 litres par plant sont nécessaires quand l'eau contient du polymère.

A la fin de la saison, le taux de mortalité pour les plants ayant été traités avec le polymère est très inférieur comparé au témoin.

Malgré des conditions d'accès difficiles à l'eau et sans matériel de mélange, la forme sachet permet l'utilisation de polymère pour l'irrigation.

## Revendications

1. Produit destiné à être additionné à l'eau d'irrigation de cultures ou plantations comprenant une composition contenant un ou plusieurs polymères hydrosolubles et un système effervescent, **caractérisée en ce que** ladite composition contenant le ou lesdits polymères hydrosolubles et ledit système effervescent se présente sous la forme d'une poudre, ladite composition étant emprisonnée dans un film hydrosoluble.

2. Produit selon la revendication 1 **caractérisé en ce que** la poudre est une poudre de particules individualisées.

3. Produit selon la revendication 1 ou 2 **caractérisé en ce que** la taille des particules formant la poudre est inférieure à 1 mm.

4. Produit selon l'une des revendications précédentes **caractérisé en ce que** le temps de dissolution de la composition, une fois le produit placé dans 1m³ d'eau, à 20°C, est de 2 minutes pour un produit de 50 g comportant 20% de polymère.

5. Produit selon l'une des revendications précédentes **caractérisé en ce que** le système effervescent correspond à un ou plusieurs composés acides et un composé alcalin.

6. Produit selon la revendication 5 **caractérisé en ce que** le système effervescent correspond à un ou plusieurs composés acides choisi(s) parmi l'acide citrique, l'acide tartrique, l'acide adipique, l'acide fumarique, l'acide maléique et leurs sels et un composé alcalin choisi parmi les carbonates et les bicarbonates de sodium, de calcium et de potassium.

7. Produit selon l'une des revendications précédentes **caractérisé en ce que** le système effervescent représente de 1 à 50%, préférentiellement de 5 à 30%, et plus préférentiellement de 20 à 25% en masse de la masse totale de la composition.

8. Produit selon l'une des revendications précédentes **caractérisé en ce que** la composition contient, en outre, un agent anti-tassement et/ou des charges minérales.

9. Produit selon la revendication 8 **caractérisé en ce que** la composition contient un agent anti-tassement choisi parmi la liste suivante:
carboxyméthyl cellulose (CMC), carbonate de sodium, carbonate de potassium, carbonate d'ammonium, bicarbonate d'ammonium, ferrocyanure de sodium, ferrocyanure de potassium, ferrocyanure de calcium, silicate de zinc.

10. Produit selon la revendication 8 ou 9 **caractérisé en ce que** la composition contient un agent anti-tassement et que l'agent anti-tassement représente de 0 à 10%, préférentiellement de 0,5 à 5%, et plus préférentiellement de 1 à 2% en masse de la masse totale de la composition.

11. Produit selon l'une des revendications 8 à 10 **caractérisé en ce que** la composition contient une ou des charges minérales choisie(s) parmi les sels de sulfate ou de chlorure de métaux alcalin.

12. Produit selon l'une des revendications 8 à 11 **caractérisé en ce que** la composition contient une ou des charges minérales et **en ce que** les charges minérales représentent, de préférence, de 0 à 98%, et, de préférence, de 10 à 90%, et plus préférentiellement de 20 à 70% en masse de la masse totale de la composition.

13. Produit selon l'une des revendications précédentes **caractérisé en ce que** le ou les polymères hydrosolubles sont des copolymères composés de:
- 1 à 99 mol % d'au moins un monomère anionique, notamment, choisi parmi l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido2-méthylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, ou d'ammonium, et
- 1 à 99 mol % d'au moins un monomère non ionique, notamment, choisi parmi l'acrylamide, le méthacrylamide, le N-isopropylacrylamide, le N,N-diméthylacrylamide, le N-méthylolacrylamide, la N-vinylformamide, le N-vinyl acetamide, la N-vinylpyridine et la N-vinylpyrrolidone.

14. Produit selon l'une des revendications précédentes **caractérisé en ce que** le ou les polymères hydrosolubles comprennent également :
- un ou plusieurs monomères cationiques de type acrylamide, acrylique, vinylique, allylique ou maléique possédant une fonction amine ou ammonium quaternaire, notamment choisi parmi l'acrylate de diméthylaminoéthyl (ADAME), le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et le chlorure de methacrylamido propyltrimethyl ammonium (MAPTAC), et/ou
- un ou plusieurs monomères hydrophobes de type acrylamide, acrylique, vinylique, allylique ou maléique possédant une fonction hydrophobe latérale notamment choisi parmi les dérivés de l'acrylamide comme les N-alkylacrylamides, par exemple, le diacétone acrylamide, l'isopropyl acrylamide, le N-tert-butylacrylamide, l'octylacrylamide, les N,N-dialkylacrylamides comme le N,N-dihexylacrylamide et le N,N diméthylacrylamide, les dérivés d'acide acrylique comme les alkyl acrylates et méthacrylates et les monomères vinyliques comme la N-vinylformamide, le N-vinyl acétamide, la N-vinylpyridine et le N-vinylimidazole.

15. Produit selon l'une des revendications précédentes **caractérisé en ce que** l'ionicité du ou des polymères hydrosolubles présents dans la composition est de 1 à 50%mol anionique, et préférentiellement de 10 à 30%mol anionique.

16. Produit selon l'une des revendications précédentes **caractérisé en ce que** le polymère ou les polymères hydrosolubles représente(nt) de 1 à 50%, et préférentiellement de 4,5 à 40%, plus préférentiellement de 9 à 20% en masse de la masse totale de la composition.

17. Produit selon l'une des revendications précédentes **caractérisé en ce que** le film est composé d'une ou de plusieurs couches, chacune des couches étant composée d'alcool polyvinylique, de polyoxyéthylène, de dérivés de la cellulose comme la méthylcellulose, la méthylhydroxyéthylcellulose, la méthylhydroxypropylcellulose, l'hydroxypropylcellulose, l'acétate de cellulose et les dérivés de cellulose modifés pour être hydrophobes, ou d'un composé choisi parmi le polyacrylate de sodium, l'acide polylactique, les éthers de l'acide lactique, les esters de l'alcool polyvinylique, les éthers de l'acide lactique, les esters de dérivés de cellulose, l'acide lactique greffé sur l'alcool polyvinylique, la carraghénane, la pectine, ou d'une combinaison de plusieurs des composés ci-dessus cités ou d'un mélange de un ou plusieurs de ces composés avec de l'amidon modifié ou non tel que l'amidon de maïs, de pomme de terre de riz et de blé.

18. Produit selon l'une des revendications précédentes **caractérisé en ce que** la composition comporte en plus du ou des polymères hydrosolubles, de préférence à base d'acrylamide, un mélange acide citrique, acide adipique et bicarbonate de sodium, en tant que système effervescent, du carboxyméthylcellulose en tant qu'agent anti-tassement et du sulfate de sodium en tant que charge minérale.

19. Produit selon l'une des revendications précédentes **caractérisé en ce qu'**il se présente sous la forme d'un sachet.

20. Procédé d'irrigation de cultures ou plantations dans lequel les cultures ou plantations sont irriguées avec de l'eau dans laquelle un produit selon l'une des revendications précédentes a été dissous.

21. Procédé selon la revendication 20 **caractérisé en ce que** le produit est dissous dans l'eau d'irrigation, en l'absence d'agitation

22. Procédé selon la revendication 20 ou 21 dans lequel l'irrigation est réalisée grâce à un dispositif d'irrigation gravitaire ou à un dispositif d'irrigation sous pression.

## Patentansprüche

1. Produkt, das dazu bestimmt ist, dem Wasser zur Bewässerung von Anbaukulturen oder Plantagen zugegeben zu werden, umfassend eine Zusammensetzung, die ein oder mehrere wasserlösliche Polymere und ein Brausesystem enthält, **dadurch gekennzeichnet, dass** die das oder die wasserlösliche(n) Polymer(e) und das Brausesystem enthaltende Zusammensetzung in Form eines Pulvers vorliegt, wobei die Zusammensetzung in einem wasserlöslichen Film eingeschlossen ist.

2. Produkt nach Anspruch 1, **dadurch gekennzeichnet, dass** das Pulver ein Pulver aus vereinzelten Teilchen ist.

3. Produkt nach Anspruch 1 oder 2, **dadurch gekennzeichnet, dass** die Größe der das Pulver bildenden Teilchen weniger als 1 mm beträgt.

4. Produkt nach einem der vorhergehenden Ansprüche, **dadurch gekennzeichnet, dass** für ein Produkt von 50 g, das 20 % Polymer umfasst, die Auflösungszeit der Zusammensetzung, sobald das Produkt in 1m³ Wasser bei 20 °C eingebracht ist, 2 Minuten beträgt.

5. Produkt nach einem der vorhergehenden Ansprüche, **dadurch gekennzeichnet, dass** das Brausesystem einer oder mehreren sauren Verbindungen und einer alkalischen Verbindung entspricht.

6. Produkt nach Anspruch 5, **dadurch gekennzeichnet, dass** das Brausesystem einer oder mehreren sauren Verbindungen, ausgewählt aus Citronensäure, Weinsäure, Adipinsäure, Fumarsäure, Maleinsäure und ihren Salzen, sowie einer alkalischen Verbindung, ausgewählt aus Natrium-, Calcium- und Kaliumcarbonaten und - bicarbonaten, entspricht.

7. Produkt nach einem der vorhergehenden Ansprüche, **dadurch gekennzeichnet, dass** das Brausesystem 1 bis 50, vorzugsweise 5 bis 30 und weiter bevorzugt 20 bis 25 Masseprozent der Gesamtmasse der Zusammensetzung ausmacht.

8. Produkt nach einem der vorhergehenden Ansprüche, **dadurch gekennzeichnet, dass** die Zusammensetzung ferner ein Mittel zur Verhinderung des Verdichtens und/oder mineralische Füllstoffe enthält.

9. Produkt nach Anspruch 8, **dadurch gekennzeichnet, dass** die Zusammensetzung ein Mittel zur Verhinderung des Verdichtens enthält, das aus folgender Liste ausgewählt ist: Carboxymethylcellulose (CMC), Natriumcarbonat, Kaliumcarbonat, Ammoniumcarbonat, Ammoniumbicarbonat, Natriumferrocyanid, Kaliumferrocyanid, Calciumferrocyanid, Zinksilikat.

10. Produkt nach Anspruch 8 oder 9, **dadurch gekennzeichnet, dass** die Zusammensetzung ein Mittel zur Verhinderung des Verdichtens enthält und dass das Mittel zur Verhinderung des Verdichtens 0 bis 10, vorzugsweise 0,5 bis 5 und weiter bevorzugt 1 bis 2 Masseprozent der Gesamtmasse der Zusammensetzung ausmacht.

11. Produkt nach einem der Ansprüche 8 bis 10, **dadurch gekennzeichnet, dass** die Zusammensetzung einen oder mehrere mineralische Füllstoffe, ausgewählt aus den Sulfat- oder Chloridsalzen von Alkalimetallen.

12. Produkt nach einem der Ansprüche 8 bis 11, **dadurch gekennzeichnet, dass** die Zusammensetzung einen oder mehrere mineralische Füllstoffe enthält und dass die mineralischen Füllstoffe vorzugsweise 0 bis 98 und bevorzugt 10 bis 90 und weiter bevorzugt 20 bis 70 Masseprozent der Gesamtmasse der Zusammensetzung ausmachen.

13. Produkt nach einem der vorhergehenden Ansprüche, **dadurch gekennzeichnet, dass** das oder die wasserlösliche(n) Polymer(e) Copolymere sind, bestehend aus:
- 1 bis 99 Mol-% wenigstens eines anionischen Monomers, insbesondere ausgewählt aus Acrylsäure, Methacrylsäure, Itaconsäure, Crotonsäure, Maleinsäure, Fumarsäure und den Monomere vom Typ starke Säure, beispielsweise mit einer Funktion vom Typ Sulfonsäure oder Phosphonsäure, wie 2-Acrylamido2-methylpropansulfonsäure, Vinylsulfonsäure, Vinylphosphonsäure, Allylsulfonsäure, Allylphosphonsäure, Styrolsulfonsäure und deren wasserlöslichen Salzen eines Alkalimetalls, eines Erdalkalimetalls oder von Ammonium, und
- 1 bis 99 Mol-% wenigstens eines nichtionischen Monomers, insbesondere ausgewählt aus Acrylamid, Methacrylamid, N-Isopropylacrylamid, N,N-Dimethylacrylamid, N-Methylolacrylamid, N-Vinylformamid, N-Vinylacetamid, N-Vinylpyridin und N-vinylpyrrolidon.

14. Produkt nach einem der vorhergehenden Ansprüche, **dadurch gekennzeichnet, dass** das oder die wasserlösliche(n) Polymer(e) auch enthalten:
- ein oder mehrere kationische Monomere vom Typ Acrylamid, Acryl-, Vinyl-, Allyl- oder Malein- mit einer Amin- oder quartären Ammonium-Funktion, insbesondere ausgewählt aus Dimethylaminoethylacrylat (ADAME), Dimethylaminoethylmethacrylat (MADAME), quaternierte oder versalzte, Dimethyldiallylammoniumchlorid (DADMAC), Acrylamidopropyltrimethylammoniumchlorid (APTAC) und Methacrylamidopropyltrimethylammoniumchlorid (MAPTAC), und/oder
- ein oder mehrere hydrophobe Monomere vom Typ Acrylamid, Acryl-, Vinyl-, Allyl- oder Malein-, mit einer hydrophoben Seitenfunktion, insbesondere ausgewählt aus den Derivaten von Acrylamid, wie zum Beispiel N-Alkylacrylamide, Diacetonacrylamid, Isopropylacrylamid, N-tert-Butylacrylamid, Octylacrylamid, N,N-Dialkylacrylamide wie N,N-Dihexylacrylamid und N,N Dimethylacrylamid, den Acrylsäurederivaten, wie Alkylacrylate und Methacrylate, und den Vinylmonomeren, wie N-Vinylformamid, N-Vinylacetamid, N-Vinylpyridin und N-Vinylimidazol.

15. Produkt nach einem der vorhergehenden Ansprüche, **dadurch gekennzeichnet, dass** die lonizität des oder der wasserlöslichen Polymere, die in der Zusammensetzung vorhanden sind, 1 bis 50 Mol-% anionisch und vorzugsweise 10 bis 30 Mol-% anionisch, beträgt.

16. Produkt nach einem der vorhergehenden Ansprüche, **dadurch gekennzeichnet, dass** das oder die wasserlösliche(n) Polymer(e) 1 bis 50 und vorzugsweise 4,5 bis 40, weiter bevorzugt 9 bis 20 Masseprozent der Gesamtmasse der Zusammensetzung ausmacht/ausmachen.

17. Produkt nach einem der vorhergehenden Ansprüche, **dadurch gekennzeichnet, dass** der Film aus einer oder mehreren Schichten besteht, wobei eine jede der Schichten aus Polyvinylalkohol, Polyoxyethylen, Cellulosederivaten, wie Methylcellulose, Methylhydroxyethylcellulose, Methylhydroxypropylcellulose, Hydroxypropylcellulose, Celluloseacetat und Cellulosederivate, die modifiziert sind, um hydrophob zu sein, oder aus einer Verbindung, ausgewählt aus Natriumpolyacrylat, Polymilchsäure, Milchsäureethern, Ester von Polyvinylalkohol, Milchsäureethern, Estern von Cellulosederivaten, auf Polyvinylalkohol gepfropfte Milchsäure, Carrageen, Pektin, oder aus einer Kombination aus mehreren der vorstehend genannten Verbindungen oder aus einer Mischung aus einer oder mehreren dieser Verbindungen mit modifizierter oder nicht modifizierter Stärke, wie Mais-, Kartoffel-, Reis- und Weizenstärke, besteht.

18. Produkt nach einem der vorhergehenden Ansprüche, **dadurch gekennzeichnet, dass** die Zusammensetzung zusätzlich zu dem oder den wasserlöslichen Polymeren, vorzugsweise auf Basis von Acrylamid, eine Mischung aus Citronensäure, Adipinsäure und Natriumbicarbonat als Brausesystem, Carboxymethylcellulose als Mittel zur Verhinderung des Verdichtens und Natriumsulfat als mineralischen Füllstoff umfasst.

19. Produkt nach einem der vorhergehenden Ansprüche, **dadurch gekennzeichnet, dass** es in Form eines Beutels vorliegt.

20. Verfahren zur Bewässerung von Anbaukulturen oder Plantagen, wobei die Anbaukulturen oder Plantagen mit Wasser bewässert werden, in dem ein Produkt nach einem der vorhergehenden Ansprüche gelöst worden ist.

21. Verfahren nach Anspruch 20, **dadurch gekennzeichnet, dass** das Produkt in dem Bewässerungswasser ohne Rühren gelöst wird.

22. Verfahren nach Anspruch 20 oder 21, wobei die Bewässerung mittels einer Schwerkraft-Bewässerungsvorrichtung oder einer Druckbewässerungsvorrichtung durchgeführt wird.

## Claims

1. A product intended to be added to crop or plantation irrigation water, comprising a composition containing one or more water-soluble polymers and an effervescent system, wherein the said composition containing the one or more water-soluble polymers and the said effervescent system is in the form of a powder, the said composition being confined in a water-soluble film.

2. The product as claimed in claim 1, wherein the powder is a powder of individualized particles.

3. The product as claimed in claim 1, wherein the size of the particles of the composition is preferably less than 1 millimeter

4. The product as claimed in one of the preceding claims, wherein the dissolution time of the composition, once the product has been placed in 1 m³ of water, at 20°C, is 2 minutes for a product of 50 g comprising 20% of polymer.

5. The product as claimed in one of the preceding claims, wherein the effervescent system corresponds to one or more acid compounds and an alkali metal compound.

6. The product as claimed in claim 4, wherein the effervescent system corresponds to one or more acid compounds chosen from citric acid, tartaric acid, adipic acid, fumaric acid and maleic acid, and salts thereof, and an alkali metal compound chosen from sodium carbonates and bicarbonates, calcium carbonates and bicarbonates and potassium carbonates and bicarbonates.

7. The product as claimed in one of the preceding claim, wherein the effervescent system represents from 1 to 50%, preferentially from 5 to 30% and more preferentially from 20 to 25% by weight of the total weight of the composition.

8. The product as claimed in one of the preceding claims, wherein the composition also contains an anti-packing agent and/or inorganic fillers.

9. The product as claimed in claim 7, wherein the composition contains an anti-packing agent chosen from the following list: carboxymethylcellulose (CMC), sodium carbonate, potassium carbonate, ammonium carbonate, ammonium bicarbonate, sodium ferrocyanide, potassium ferrocyanide, calcium ferrocyanide and zinc silicate.

10. The product as claimed in claim 8 or 9, wherein the composition contains an anti-packing agent and wherein the anti-packing agent represents from 0 to 10%, preferentially from 0.5 to 5% and more preferentially from 1 to 2% by weight of the total weight of the composition.

11. The product as claimed in one of claims 8 to 10, wherein the composition contains one or more inorganic fillers chosen from alkali metal sulfate or chloride salts.

12. The product as claimed in one of claims 8 to 11, wherein the composition contains one or more inorganic fillers and wherein the inorganic fillers preferably represent from 0 to 98%, preferably from 10 to 90% and more preferentially from 20 to 70% by weight of the total weight of the composition.

13. The product as claimed in one of the preceding claims, wherein the water-soluble polymer(s) is (are) copolymers composed of:
- 1 to 99 mol% of at least one anionic monomer, in particular, chosen from acrylic acid, methacrylic acid, itaconic acid, crotonic acid, maleic acid, fumaric acid and monomers of strong acid type having, for example, a function of sulfonic acid or phosphonic acid type, such as 2-acrylamido-2-methylpropanesulfonic acid, vinylsulfonic acid, vinylphosphonic acid, allylsulfonic acid, allylphosphonic acid, styrenesulfonic acid and their water-soluble salts of an alkali metal, of an alkaline earth metal or of ammonium, and
- 1 to 99 mol% of at least one nonionic monomer, in particular, chosen from acrylamide, methacrylamide, N-isopropylacrylamide, N,N-dimethylacrylamide, N-methylolacrylamide, N-vinylformamide, N-vinylacetamide, N-vinylpyridine and N-vinylpyrrolidone.

14. The product as claimed in one of the preceding claims, wherein the water-soluble polymer(s) also comprise(s):
- one or more cationic monomers of acrylamide, acrylic, vinyl, allyl or maleic type having a quaternary ammonium or amine function, in particular chosen from dimethylaminoethyl acrylate (ADAME), dimethylaminoethyl methacrylate (MADAME) which are quaternized or salified, dimethyldiallylammonium chloride (DADMAC), acrylamidopropyltrimethylammonium chloride (APTAC) and methacrylamidopropyltrimethylammonium chloride (MAPTAC), and/or
- one or more hydrophobic monomers of acrylamide, acrylic, vinyl, allyl or maleic type having a side hydrophobic function, particularly chosen from acrylamide derivatives, for instance N-alkylacrylamides, for example, diacetoneacrylamide, isopropylacylamide, N-tert-butylacrylamide and octylacrylamide, and N,N-dialkylacrylamides, for instance N,N-dihexylacrylamide and N,N-dimethylacrylamide, and acrylic acid derivatives, for instance alkyl acrylates and methacrylates, and vinyl monomers such as N-vinylformamide, N-vinylacetamide, N-vinylpyridine and N-vinylimidazole.

15. The product as claimed in one of the preceding claims, wherein the ionicity of the water-soluble polymer(s) present in the composition is from 1 to 50 mol% anionic and preferentially from 10 to 30 mol% anionic.

16. The product as claimed in one of the preceding claims, wherein the water-soluble polymer(s) represent(s) from 1 to 50%, preferentially from 4.5 to 40% and more preferentially from 9 to 20% by weight of the total weight of the composition.

17. The product as claimed in one of the preceding claims, wherein the film is composed of one or more layers, each of the layers being composed of polyvinyl alcohol, of polyoxyethylene, of cellulose derivatives such as methylcellulose, methylhydroxyethylcellulose, methylhydroxypropylcellulose, hydroxypropylcellulose, cellulose acetate and cellulose derivatives modified so as to be hydrophobic, or of a compound chosen from sodium polyacrylate, polylactic acid, lactic acid ethers, polyvinyl alcohol esters, lactic acid, ethers, cellulose derivative esters, lactic acid grafted onto polyvinyl alcohol, carrageenan and pectin, or of a combination of several of the compounds mentioned above or of a mixture of one or more of these compounds with modified or unmodified starch, such as corn starch, potato starch, rice starch and wheat starch.

18. The product as claimed in one of the preceding claims, wherein the composition also comprises water-soluble polymer(s), preferably based on acrylamide, a mixture of citric acid, adipic acid and sodium carbonate, as effervescent system, carboxymethylcellulose as anti-packing agent and sodium sulfate as inorganic filler.

19. The product as claimed in one of the preceding claims, which is in the form of a bag.

20. A crop or plantation irrigation process in which the crops or plantations are irrigated with water in which a product as claimed in one of the preceding claims has been dissolved.

21. The process as claimed in claim 20, wherein the product is dissolved in the irrigation water, in the absence of stirring.

22. The process as claimed in claim 20 or 21, in which the irrigation is carried out by means of a gravity irrigation device or a pressurized irrigation device.
